# FASCICULE DE BREVET EUROPEEN

(11) **EP 2 867 280 B1**
(45) Date de publication et mention de la délivrance du brevet: **25.07.2018**
(21) Numéro de dépôt: 13731399.5
(22) Date de dépôt: 07.06.2013
(51) Int. Cl.: B32B 7/12, B29C 47/00, B29C 47/10, B32B 27/22, B29C 47/92, B29C 55/28, C09J 135/02, C09J 133/14, C09J 133/08, B32B 27/12, B32B 27/32, B32B 5/02, C08J 5/18

(54) **UTILISATION D'UN ALLIAGE D'AMIDON THERMOPLASTIQUE ET DE POF POUR LA FABRICATION D'UN FILM ULTRA-FIN IMPER-RESPIRANT ADHESIF**
VERWENDUNG EINER LEGIERUNG AUS THERMOPLASTISCHER STÄRKE UND POF ZUR HERSTELLUNG EINES ULTRAFEINER ATMUNGSFÄHIGER UND WASSERDICHTER KLEBRIGER FILM
USE OF AN ALLOY OF THERMOPLASTIC STARCH AND POF FOR THE MANUFACTURE OF ULTRA FINE BREATHABLE AND WATER IMPERMEABLE ADHESIVE FILM

(30) Priorité: 27.06.2012 FR 1256142
(43) Date de publication de la demande: 06.05.2015
(73) Titulaire: Arkema France, 92700 Colombes (FR)
(72) Inventeur: BRULE, Benoît, F-27170 Beaumont-le-Roger (FR); LE, Guillaume, F-14460 Colombelles (FR); BABIN, Perrine, FR-69006 Lyon (FR); CARTIER, Laurent B., Wayne, Pennsylvania 19087 (US); MALET, Frédéric, F-69007 Lyon (FR)
(74) Mandataire: Hérard, Elise
(86) Numéro de dépôt international: PCT/FR2013/051326
(87) Numéro de publication internationale: WO 2014/001675

(56) Documents cités:
- WO-A1-2009/068928
- WO-A1-2011/009165
- WO-A1-2012/089977
- WO-A2-2011/080623
- FR-A1- 2 765 230
- US-A- 4 454 268
- US-A- 5 407 979
- US-A- 5 510 401
- US-A- 5 908 690

## Description

### DOMAINE TECHNIQUE

Le domaine technique auquel se rapporte l'invention est celui des films imper respirants utilisés dans le domaine textile.
Un tel film imper respirant, est à la fois perméable à la vapeur d'eau et imperméable à l'eau.

### ETAT DE LA TECHNIQUE

De nombreux domaines techniques requièrent des textiles aux propriétés imper-respirantes améliorées et prolongées. On peut citer notamment le domaine médical, l'équipement médical, les blouses chirurgicales, tapis, matelas, pansements, les vêtements de protection ; l'agriculture, les films agricoles ; l'emballage, le packaging ; l'équipement militaire, l'équipement maritime, notamment les couvertures marines ; le transport, l'aéronautique, l'automobile ; le sport ; les loisirs ; l'informatique, l'électronique, l'ameublement ; la décoration ; l'équipement pour bébé ou pour enfant ; l'équipement d'extérieur ; l'isolation des murs d'un bâtiment, les films sous-toiture.

Un film imper-respirant est un film souple qui a pour rôle d'une part d'empêcher que des éléments extérieurs tels que les poussières, les pollens, le sable, la pluie et la neige ne s'infiltrent à travers le textile et d'autre part d'éviter que l'humidité produite, par exemple par l'activité humaine, ne s'accumule dans le textile. Ce film permet l'évacuation de la vapeur d'eau hors du textile. L'utilisation d'un film imper respirant permet d'avoir un textile qui respire et qui est donc sain pour ceux qui l'utilisent.

La perméabilité à la vapeur d'eau est évaluée à l'aide du paramètre MVTR (Moisture Vapor Transmission Rate). En particulier, il est souhaitable qu'un film imper-respirant présente une valeur de MVTR mesurée par la norme ASTM E96, d'au moins 70 g/m² pendant 24 heures à 23°C pour un taux d'humidité relative de 50% et une épaisseur de film de 25 µm. Pour les applications précitées, il est en particulier souhaitable que la perméabilité minimum soit d'au moins 350 g/m² dans les mêmes conditions de mesure, lorsque le film utilisé adhère sur la surface d'un textile. Il est également souhaitable que l'adhérence du film sur le textile ne soit pas altérée au fur et à mesure de l'utilisation du textile, notamment lorsque la quantité de vapeur d'eau à évacuer est plus importante en cas d'augmentation importante de la température. Autrement dit, on cherche un produit textile imper respirant qui ne soit pas facilement dégradé par une exposition prolongée à l'humidité. D'autre part, l'augmentation des propriétés imper respirantes et l'adhérence du film sur le textile ne doivent pas se faire au détriment de la souplesse ni de la finesse (épaisseur) du textile. On recherche donc un produit textile (ci-après textile traité ou produit stratifié) imper respirant présentant une forte perméabilité à la vapeur d'eau ainsi qu'une bonne durée de vie afin de garantir sa pérennité, tout en ayant l'aspect d'un textile « nu » sans traitement spécifique.

Les films connus sont fabriqués à partir de polymères synthétiques. Or, les polymères synthétiques sont fabriqués à partir de matières premières non-renouvelables. On cherche à limiter leur quantité dans la fabrication d'un film imper respirant. On recherche donc un film obtenu au moins partiellement à partir de matières premières naturelles (ou bio-ressourcées) et qui présente une perméabilité au moins aussi bonne que celle d'un film obtenu à partir de polymères synthétiques. En particulier, on cherche un film obtenu au moins partiellement à partir de matières premières naturelles, qui satisfasse aux exigences de perméabilité indiquées ci-dessus.

Par exemple, le document US 5 407 979 décrit un film semi-perméable à base de copolymère éthylène-acide acrylique (EAA) et d'amidon gélifié, mais l'épaisseur du film est supérieure à 25 µm.

Enfin, les films de l'art antérieur sont obtenus par mise en forme d'un mélange comprenant différents polymères connus pour leurs propriétés imper respirantes. La mise en forme peut s'effectuer selon tout procédé d'extrusion connu, tel que l'extrusion calandrage à plat, l'extrusion plaxage, l'extrusion soufflage. En général, malgré une forte puissance de chauffage, il n'est pas possible d'obtenir des films d'épaisseur inférieure à 25 µm. On recherche donc un film imper respirant qui puisse être fabriqué facilement avec les dispositifs classiques de fabrication de films thermoplastiques et à une température de chauffage ou d'extrusion comprise dans la gamme de 100 à 300°C, de préférence comprise dans la gamme de 150°C à 250°C.

### RESUME DE L'INVENTION

A cet effet, l'invention propose l'utilisation d'amidon thermoplastique pour la fabrication d'un film ultra-fin imper, c'est-à-dire d'épaisseur inférieure - ou égale à 25 µm, respirant et adhésif, notamment sur la surface d'au moins un matériau textile, ledit amidon thermoplastique se présentant sous la forme d'un alliage avec au moins une polyoléfine fonctionnalisée hydrophile obtenue soit par copolymérisation, soit par greffage, d'un tronc en polyoléfine par un monomère insaturé, ledit monomère insaturé étant greffé par des PEG et/ou formant un sel métallique.

De préférence, le pourcentage d'amidon thermoplastique représente de 10% à 90% du poids de l'alliage, de préférence de 30 à 80%, de préférence encore de 40 à 70 %, de préférence encore de 50 à 70 % du poids de l'alliage.

De préférence, la polyoléfine hydrophile comprend au moins 10%, de préférence au moins 20%, de préférence au moins 30%, en poids de polyéthylène glycol (PEG) et/ou de sel métallique, sur le poids de polyoléfine.

Selon un mode de réalisation particulier de l'invention, l'alliage comprend en outre au moins un TPE hydrophile choisi parmi les copolymères à blocs polyamide et blocs PEG (PEBA), les copolymères à blocs polyesters et blocs PEG (COPE), les copolymères à blocs polyuréthanes et blocs PEG (TPU) et leurs mélanges, ledit TPE hydrophile représentant de préférence une teneur de 1 à 99 %, de préférence de 20 à 80% du poids de l'alliage.

La présente invention a également pour objet un film ultra fin, imper respirant et adhésif, caractérisé en ce qu'il comprend un alliage d'amidon thermoplastique et de polyoléfine hydrophile, ladite polyoléfine comprenant au moins un motif polyéthylène et au moins un monomère insaturé sur lequel est greffée une teneur d'au moins 10%, de préférence au moins 20%, de préférence au moins 30%, de préférence au moins 40%, en poids de polyéthylène glycol (PEG) et/ou de sel métallique, sur le poids de la polyoléfine.

De préférence, le pourcentage d'amidon thermoplastique représente 10% à 90%, et le pourcentage de polyoléfine hydrophile représente de 90% à 10%, du poids de l'alliage.

Selon un mode de réalisation, ladite polyoléfine fonctionnalisée comporte un greffage par un monomère choisi dans le groupe comprenant les acides carboxyliques insaturés, les anhydrides carboxyliques insaturés, les monomères vinyliques, les monomères acryliques, ou un mélange de ceux-ci.

Selon un mode de réalisation particulier, la polyoléfine fonctionnalisée est choisie dans le groupe comprenant les copolymères éthylène-ester acrylique, les copolymères éthylène-ester acrylique-anhydride maléique, les copolymères éthylène-ester acrylique-méthacrylate de glycidyle.

Le film selon l'invention a une épaisseur inférieure ou égale à 25 µm, de préférence comprise dans la gamme de 5 à 25 µm.

La présente invention a également pour objet un procédé de fabrication du film selon l'invention, comprenant les étapes de :
a) mise à disposition d'un mélange d'amidon, de plastifiant et d'eau ;
b) mise à disposition de la polyoléfine hydrophile telle que définie par l'une quelconque des revendications 1 ou 3
c) extrusion du mélange de l'étape a) puis ajout de la polyoléfine de l'étape b) au mélange en fin d'extrusion, notamment à une température supérieure à la température de fusion du ou des polymère(s) de l'étape a) et à la température de fusion de l'amidon) ;
d) étirement du mélange pour former un film.

Selon un mode de réalisation du procédé de l'invention, l'étape d'étirement du mélange est effectuée par extrusion soufflage.

Selon un autre mode de réalisation du procédé de l'invention, l'étape d'étirement du mélange est effectuée par extrusion à plat.

De préférence, l'étape c) est effectuée à une température comprise dans la gamme de 100°C à 300°C, de préférence de 150 à 250°C.

La présente invention a également pour objet un produit stratifié comprenant au moins un matériau textile et au moins un film imper respirant selon l'invention, ledit film adhérent sur au moins une surface du matériau textile avec une force de pelage comprise dans la gamme de 0,5 à 50 N, de préférence de 0,5 à 10 N.

De préférence, ledit au moins un matériau textile se présente sous la forme d'une membrane poreuse, d'un textile tissé ou d'un textile non tissé.

De préférence, ledit au moins un matériau textile comprend des fibres synthétiques, notamment des fibres synthétiques obtenues à partir de matières premières bio-ressourcées, des fibres naturelles, des fibres artificielles fabriquées à partir de matières premières naturelles, des fibres minérales, et/ou des fibres métalliques.

Ledit au moins un matériau textile constitue par exemple un feutre, un filtre, un film, une gaze, une toile, un pansement, une couche, un tissu, un tricot, un article d'habillement, un vêtement, un article de literie, un article d'ameublement, un rideau, un revêtement d'habitacle, un textile technique fonctionnel, un géotextile, et/ou un agrotextile.

La présente invention a également pour objet l'utilisation d'un film selon l'invention dans le domaine médical, l'hygiène, la bagagerie, la confection, l'habillement, l'équipement ménager ou de la maison, l'ameublement, les moquettes, l'automobile, l'industrie, notamment la filtration industrielle, l'agriculture et/ou le bâtiment.

Le film selon l'invention peut notamment être utilisé dans le domaine médical, l'hygiène, la bagagerie, la confection, l'habillement, l'équipement ménager ou de la maison, l'ameublement, les moquettes, l'automobile, l'industrie, notamment la filtration industrielle, l'agriculture et/ou le bâtiment. Un tel film présente à la fois une bonne durabilité ainsi qu'une meilleure perméabilité à la vapeur d'eau. Le film conserve au cours du temps sa propriété de barrière contre les éléments extérieurs qui pourraient s'infiltrer dans le textile. L'amélioration de la perméabilité du film à la vapeur d'eau favorise la ventilation à travers le textile.

### EXPOSE DETAILLE DES MODES DE REALISATION DE L'INVENTION

L'invention est maintenant décrite plus en détail et de façon non limitative dans la description qui suit.

La polyoléfine fonctionnalisée hydrophile utilisée dans l'alliage selon l'invention est obtenue soit par copolymérisation, soit par greffage, d'un tronc en polyoléfine par un monomère insaturé, comportant une fonction anhydride, acide ou époxyde, cette polyoléfine fonctionnalisée hydrophile étant greffée par des motifs polyéthers, généralement à extrémité amine, en particulier des motifs polyoxyéthylène glycols (PEG) et/ou ledit monomère insaturé formant un sel métallique de sorte que la polyoléfine est un ionomère.

Par tronc en polyoléfine, on entend au sens de l'invention une polyoléfine homo polymère ou copolymère d'alpha oléfines ou de dioléfines, telles que par exemple, éthylène, propylène, butène-1, octène-1, butadiène. Des exemples d'alpha-oléfines ayant 3 à 30 atomes de carbone comme comonomères éventuels comprennent le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène. Ces alpha-oléfines peuvent être utilisées seules ou en mélange de deux ou de plus de deux.

A titre d'exemples de polyoléfine, on peut citer :
- les homo polymères et copolymères de l'éthylène, en particulier à titre d'exemple de polyéthylènes on peut citer : le polyéthylène basse densité (LDPE), le polyéthylène haute densité (HDPE), le polyéthylène linéaire basse densité (LLDPE), le polyéthylène très basse densité (VLDPE), le polyéthylène obtenu par catalyse métallocène, c'est-à-dire les polymères obtenus par copolymérisation d'éthylène et d'alphaoléfine telle que propylène, butène, héxène ou octène en présence d'un catalyseur mono-site constitué généralement d'un atome de zirconium ou de titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthamides peuvent aussi être utilisés.
- les homopolymères ou copolymères du propylène.
- les copolymères éthylène/alpha-oléfine tels qu'éthylène/propylène, les EPR (abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tels que par exemple les (méth)acrylates d'alkyle, les alkyles pouvant avoir jusqu'à 24 atomes de carbone.

Des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle.
- les esters vinyliques d'acides carboxyliques saturés tels que par exemple l'acétate ou le propionate de vinyle.
- les époxydes insaturés.

Des exemples d'époxydes insaturés sont notamment :
- les esters et éthers de glycidyle aliphatiques tels que l'allylglycidyléther, le vinylglycidyléther, le maléate et l'itaconate de glycidyle, l'acrylate et le méthacrylate de glycidyle, et
- les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbomène-2-méthyl-2-glycidyl carboxylate et l'endocis-bicyclo(2,2,1)-5-heptène-2,3-diglycidyl dicarboxylate.
- les acides carboxyliques insaturés, leurs sels, leurs anhydrides.

Des exemples d'anhydrides d'acide dicarboxylique insaturé sont notamment l'anhydride maléique, l'anhydride itaconique, l'anhydride citraconique, l'anhydride tétrahydrophtalique.
- les diènes tels que par exemple le 1,4-hexadiène.
ou les esters vinyliques d'acides carboxyliques saturés tel que l'acétate de vinyle, la proportion de comonomère pouvant atteindre 40 % en poids.
- les élastomères EPR (éthylène - propylène - rubber)
- les élastomères EPDM (éthylène - propylène - diène)
- les mélanges de polyéthylène avec un EPR ou un EPDM
- les copolymères éthylène-(méth)acrylate d'alkyle pouvant contenir jusqu'à 60 % en poids de (méth)acrylate et de préférence 2 à 40 %
- les copolymères éthylène (méth)acrylate d'alkyle-anhydride maléique obtenus par copolymérisation des trois monomères, les proportions de (méth)acrylate étant comme les copolymères ci-dessus, la quantité d'anhydride maléique étant jusqu'à 10 % et de préférence 0,2 à 6 % en poids.
- les copolymères éthylène-acétate de vinyle-anhydride maléique obtenus par copolymérisation des trois monomères, les proportions étant les mêmes que dans le copolymère précédent.

A titre d'exemple on peut citer les copolymères de l'éthylène tels que les copolymères obtenus par voie radicalaire sous haute pression de l'éthylène avec de l'acétate de vinyle, des esters (meth)acryliques de l'acide (meth)acrylique et d'un alcool ayant de 1 à 24 atomes de carbone et avantageusement de 1 à 9, les terpolymères radicalaires utilisant en plus un troisième monomère choisi par les monomères insaturés copolymérisables avec l'éthylène tels que l'acide acrylique, l'anhydride maléique, le méthacrylate de glycidyle. Ces copolymères souples peuvent aussi être des copolymères de l'éthylène avec des alpha-oléfines de 3 à 8 atomes de carbone tels que les EPR, les copolymères de très basse densité de l'éthylène avec du butène de l'hexène ou de l'octène de densité comprise entre 0.860 et 0.910 g/cm3 obtenues par catalyse metallocène ou Ziegler - Natta. Par polyoléfines souples, nous entendons également les mélanges de 2 ou plusieurs polyoléfines souples.

L'invention est particulièrement utile pour les copolymères de l'éthylène et des (méth)acrylates d'alkyle. L'alkyle peut avoir jusqu'à 24 atomes de carbone. De préférence les (méth)acrylates sont choisis parmi ceux cités plus haut. Ces copolymères comprennent avantageusement jusqu'à 40 % en poids de (méth)acrylate et de préférence 3 à 35 %. Leur MFI est avantageusement compris entre 0,1 et 50 (à 190°C - 2,16 kg).

S'agissant du monomère insaturé X, il peut être par exemple un anhydride d'acide carboxylique insaturé. L'anhydride d'acide carboxylique insaturé peut être choisi par exemple parmi les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique, . On utilise avantageusement l'anhydride maléique. On ne sortirait pas du cadre de l'invention en remplaçant tout ou partie de l'anhydride par un acide carboxylique insaturé tel que par exemple l'acide (méth)acrylique.

Le monomère peut être aussi un époxyde insaturé du type ester ou éther de glycidyle aliphatique, tel que l'allylglycidyléther, le vinylglycidyléther, le maléate et l'itaconate de glycidyle, l'acrylate et le méthacrylate de glycidyle.

Avantageusement les troncs en polyoléfine sur lesquels sont attachés les restes de X sont des polyéthylènes greffés par X ou des copolymères de l'éthylène et de X qu'on obtient par exemple par polymérisation radicalaire.

On utilise avantageusement les copolymères éthylène-anhydride maléique et éthylène - (méth)acrylate d'alkyle - anhydride maléique. Ces copolymères comprennent de 0,2 à 10 % en poids d'anhydride maléique, de 0 à 40 % et de préférence 5 à 40 % en poids de (méth)acrylate d'alkyle. Leur MFI est compris entre 5 et 100 (190°C - 2,16 kg). Les (méth)acrylates d'alkyle ont déjà été décrits plus haut. La température de fusion est comprise entre 60 et 100°C.
S'agissant des motifs polyéthers à extrémité amine, ou polyétheramines, il s'agit de préférence de monoamines, mais aussi de polyamines, ayant une masse moléculaire comprise entre environ 100 et 12 000 g/mol ; les blocs polyéthers de ces polyétheramines, sont des produits d'addition d'éthers cycliques tels que l'oxyde d'éthylène (EO), l'oxyde de propylène (PO) ou leurs mélanges à des glycols choisis notamment parmi le groupe constitué de l'éthylène glycol, le glycérol, le 1,2-propane diol, et le pentaérythritol. On utilise des blocs polyéthers de type polyéthylène glycol (PEG) selon l'invention, éventuellement associés à du polypropylène glycol (PPG), copolymères de polyéthylène glycol et de polypropylène glycol, poly(1,2-butylène glycol) et poly(tétraméthylène glycol) (PTMG). Les polyétheramines utilisées, selon l'invention, peuvent être obtenues selon des procédés d'amination bien connus, tels que décrits notamment dans les brevets US 3.654.370, US 4.152.353, US 4.618.717 et US 5.457.147.

On utilise de préférence des motifs ou blocs polyéther du type copolymères de polyéthylène glycol mono-amine, sous forme de segments courts (Mn comprise entre 100 et 10 000 g/mole et de préférence entre 250 et 5000 g/mole) ; de tels composés polyéther mono-amines sont décrits en particulier dans les brevets WO 98/51742 et US 6.465.606.

Toutefois, d'autres polyéthers tels que le polypropylène glycol (PPG) ou le polytétraméthylène glycol (PTMG) ou leurs copolymères ou leurs mélanges, peuvent aussi être utilisés. L'addition des motifs de polyéther monoaminé sur le tronc de polyoléfine contenant X s'effectue par réaction d'une fonction amine du polyéther avec X. Avantageusement lorsque X porte une fonction anhydride ou acide, on crée ainsi des jonctions imides ou amides.

Avantageusement il y a en moyenne entre 0.1 et 25 % en poids de X par chaîne attachés sur le tronc en polyoléfine. L'homme de métier peut déterminer facilement par analyse IRTF ces quantités.

On réalise l'addition du polyéther à extrémité amine sur le tronc de polyoléfine contenant X de préférence à l'état fondu. On peut ainsi, dans une extrudeuse, malaxer le polyéther et le tronc à une température généralement comprise entre 150 et 300°C.

Les rapports en poids des quantités de polyéther à extrémité amine et de polyoléfine fonctionnalisée introduites en mélange, sont compris entre 1/99 et 80/20, et de préférence entre 20/80 et 50/50.

La polyoléfine peut être mélangée à la polyoléfine fonctionnalisée greffée par des motifs polyéthers de l'invention, on peut utiliser tout type de polyoléfine tel que décrit ci-dessus pour le tronc en polyoléfine ; en particulier des copolymères d'éthylène et de (méth)acrylate d'alkyle sont particulièrement appropriés.

Les compositions de l'invention peuvent être préparées par mélange à l'état fondu dans des extrudeuses (mono ou bi vis), des co-malaxeurs BUSS, des mélangeurs internes et en général les dispositifs habituels de mélange des thermoplastiques et de préférence les extrudeuses bivis co-rotatives.

Les compositions de l'invention peuvent être préparées en une étape dans une extrudeuse. Dans les premières zones on introduit la polyoléfine fonctionnalisée (par exemple un copolymère éthylène-(meth)acrylate d'alkyle-anhydride maleique), puis le polyéther à extrémité amine.

Le temps de séjour moyen de la matière fondue dans l'extrudeuse peut être compris entre 5 secondes et 10 minutes, et de préférence entre 10 et 60 secondes. Le rendement de cette addition est évalué par extraction sélective des polyéthers libres c'est-à-dire ceux qui n'ont pas réagi pour former le copolymère greffé à blocs polyéthers final.

Avantageusement la proportion de blocs polyéthers greffés est d'environ 50 % de la quantité introduite.

Les compositions de l'invention peuvent comprendre aussi divers additifs, en particulier des agents glissants tels que de la silice, de l'N,N'-éthylène-bis amide, du stéarate de calcium ou du stéarate de magnésium. Ils peuvent aussi comprendre des antioxydants, des anti- U.V., des charges minérales, des pigments de coloration.

Selon un autre mode de réalisation, la polyoléfine fonctionnalisée hydrophile utilisée dans l'alliage selon l'invention est choisie parmi les polyoléfines hydrophiles ionomères (ci-après "ionomères"). Par ionomères, on entend au sens de l'invention des copolymères ioniques d'une oléfine comme l'éthylène avec un sel métallique d'un acide carboxylique insaturé, tel que l'acide acrylique, l'acide méthacrylique, ou l'acide maléique, et optionnellement d'autres co-monomères. Au moins un cation de métal alcalin, de métal de transition, ou de métal alcalino-terreux, tel que le lithium, le sodium, le potassium, le magnésium, le calcium, ou le zinc, ou une combinaison de ces cations, est utilisé(e) pour neutraliser une partie des groupes acides dans le copolymère, résultant en une résine thermoplastique présentant des propriétés améliorées.

Par exemple, "éthylène / acide (méth)acrylique (abrégé E / (M) AA)" désigne un copolymère d'éthylène (en abrégé E) et d'acide acrylique (AA) et /ou de l'éthylène / et de l'acide méthacrylique (MAA), qui peut ensuite être au moins partiellement neutralisé par un ou plusieurs métaux alcalins, de métaux de transition, ou cations de métaux alcalino-terreux pour former un ionomère. On peut citer notamment les ionomères au moins partiellement neutralisés par des cations de potassium.

Des terpolymères peuvent également être fabriqués à partir d'une oléfine comme l'éthylène, un acide carboxylique insaturé et d'autres comonomères tels que les (méth)acrylates d'alkyl (fournissant des résines plus souples) qui peuvent être neutralisés pour former des ionomères (souples).

Selon un mode de réalisation avantageux, la polyoléfine ionomère utilisée dans l'alliage selon l'invention comprend :
(i) au moins un E / X / Y où E est un copolymère d'éthylène, X est un acide carboxylique en C3 à C8 alpha bêta insaturé, et Y est un comonomère choisi parmi un acrylate d'alkyle et méthacrylate d'alkyle dans lequel les groupes alkyle ont de un à huit atomes de carbone, dans lequel X représente environ 2-30 % en poids du copolymère E / X / Y et Y représente environ 0 à 40 % en poids du copolymère E / X / Y, et
(ii) un ou plusieurs acides organiques ou leurs sels, où les fonctionnalités acide carboxylique sont au moins partiellement neutralisées par du potassium.

Des ionomères particulièrement préférés dans la présente invention comprennent des dipolymères E / (M) AA ayant de 2 à 30 % en poids de (M) AA de poids moléculaire moyen compris dans la gamme de 80.000 à 500.000, au moins partiellement neutralisé par du potassium.

La neutralisation peut être effectuée en fabriquant d'abord le copolymère d'E / (M) AA puis en traitant le copolymère avec une(des) base inorganique(s) de métal alcalin, métal alcalino-terreux ou un(des) cation(s) de métal de transition.

Les polyoléfines ionomères selon l'invention sont au moins partiellement neutralisées par du potassium, mais d'autres cations (par exemple de sodium, de magnésium ou de zinc) peuvent également être présents dans les compositions de polyoléfines ionomères de l'invention.

Les méthodes de préparation des ionomères de copolymères sont bien connues de l'homme du métier. Par exemple, les copolymères d'éthylène et d'acide carboxylique en C3 à C8 alpha, bêta insaturé sont mis à l'état fondu, puis au moins partiellement neutralisés.

Comme indiqué ci-dessus, les ionomères acide éthylène peuvent être mélangés en masse à l'état fondu avec d'autres ionomères ou polymères et / ou modifiés par l'incorporation d'acides organiques ou leurs sels. Les copolymères ci-dessus sont mélangés à l'état fondu avec des acides organiques ou leurs sels, en particulier aliphatiques, acide(s) organique(s) mono-fonctionnel(s) ayant de 6 à 36 atomes de carbone ou leurs sels. De préférence, les acides organiques au moins partiellement neutralisés, sont des acides aliphatiques, mono-fonctionnels ayant moins de 36 atomes de carbone ou des sels de ceux-ci. De préférence, plus de 80% de tous les composants acides dans le mélange sont neutralisés, de préférence plus de 90% sont neutralisés. Plus préférablement, 100% des composants acides dans la polyoléfine ionomère sont neutralisés par du potassium.

Selon ce mode de réalisation particulier de l'invention, les composants acides dans la composition de l'invention sont au moins partiellement neutralisés par du potassium. Les acides organiques ou les sels de ces acides utilisés dans la présente invention sont choisis de préférence parmi les acides gras stéarique, oléique, acides érucique et béhénique. L'acide stéarique et l'acide oléique sont préférés.

De préférence, les acides organiques ou leurs sels sont ajoutés en une quantité d'au moins 5 % (en poids) de la quantité totale de copolymère et d'acide organique. Plus préférentiellement, les acides organiques ou leurs sels sont ajoutés en une quantité d'au moins 15 %, encore plus préférentiellement au moins 30%. De préférence, l' (les) acide(s) organique(s) sont ajoutés en une quantité allant jusqu'à 50% (en poids) sur la quantité totale de copolymère et d'acide organique. On préfère des compositions de polyoléfines dans lesquelles les acides organiques ou leurs sels sont ajoutés en une quantité allant jusqu'à 45%.

Les ionomères peuvent éventuellement contenir un troisième monomère qui perturbe la cristallinité du polymère. Ces copolymères d'acide, où l'alpha-oléfine est l'éthylène, sont notés E / X / Y, dans lequel E est l'éthylène, X est l'alpha, bêta acide carboxylique insaturé, en particulier l'acide acrylique ou méthacrylique, et Y est le comonomère. Les co-monomères préférés dans ce cas sont en C1 à C8, tels qu'un acrylate d'alkyle ou les esters de méthacrylate. X représente typiquement jusqu'à 35 % en poids du copolymère et Y typiquement jusqu'à 50% en poids du copolymère.

Les copolymères à base d'éthylène et d'acide, sont notamment les terpolymères : éthylène / acid (méth)acrylique/ (méth)acrylate de n-butyl, éthylène / acide (méth)acrylique / (méth)acrylate d'iso-butyl, éthylène / acide (méth)acrylique / (méth) acrylate de méthyl, éthylène / acide (méth)acrylique / (méth)acrylate d'éthyle et en particulier les copolymères éthylène / acide (méth)acrylique / (méth)acrylate de butyle.

Les ionomères de l'invention cette invention peuvent être produits par : (a) mélange en milieu fondu (1) d'éthylène et d'acide alpha, bêta insaturé en C 3 à C 8, (b) ajout d'une quantité suffisante de source de cations (de préférence au moins partiellement constituée de cations potassium) en présence d'eau pour obtenir le niveau désiré de neutralisation de tous les groupements acides.

Le mélange de ionomère(s) et d'acide(s) organique(s) du mode de réalisation particulier de l'invention peut être réalisé par mélange en fusion de l'acide organique (ou sel de celui-ci) avec un ionomère à l'état fondu fabriqué séparément, puis éventuellement en neutralisant le mélange avec des cations identiques ou différents pour atteindre les niveaux souhaités de neutralisation du mélange obtenu de ionomère et d'acide organique. De préférence les terpolymères non neutralisés et les acides organiques sont mélangés en masse fondue, puis neutralisés in situ. Dans ce cas, le niveau souhaité de neutralisation peut être atteint en une seule étape.

Par exemple, des copolymères d'éthylène contenant de l'acide (méth) acrylique peuvent être mélangés fondus avec soit le stéarate de potassium (ou des sels de potassium d'autres acides organiques); ou en variante, avec de l'acide stéarique (ou d'autres acides organiques), puis neutralisés in situ avec une source de cations potassium pour convertir les copolymères modifiés dans l'acide organique en ionomères acides modifiés par le potassium selon différents degrés de neutralisation, y compris 100%.

Les acides organiques utilisés dans la présente invention incluent les acides aliphatiques, mono-fonctionnels (saturés, insaturés, ou multi-insaturés), en particulier ceux ayant de 6 à 36 atomes de carbone. Des acides organiques préférés dans la présente invention comprennent l'acide caproïque, acide caprylique, acide caprique, acide laurique, l'acide stéarique, l'acide béhénique, l'acide érucique, l'acide oléique, et de l'acide linoléique. A noter également l'utilisation d'isomères ramifiés de stéarique et / ou des acides oléiques, comme le 2-méthyl acide stéarique et ses sels et 2-méthyl acide oléique et les sels de celui-ci dans la présente invention. Les acides hydroxylés tels que l'acide 12-hydroxy stéarique sont préférés. De préférence, les sels de potassium de ces acides sont utilisés.

Des exemples d'acide carboxylique insaturé préférés pour les polyoléfines hydrophiles ionomères sont notamment : l'acide acrylique, l'acide méthacrylique, l'acide fumarique, l'anhydride maléique, le maléate de monométhyle, le maléate de monoéthyle, etc particulièrement préférés sont l'acide acrylique et / ou d'acide méthacrylique. Des exemples de monomères polaires qui peuvent servir en tant que composants de copolymérisation comprennent des esters vinyliques comme l'acétate de vinyle et propionate de vinyle; esters d'acides carboxyliques insaturés tels que l'acrylate de méthyle, l'acrylate d'éthyle, l'acrylate d'isopropyle, n-butyle, l'acrylate d'isobutyle, l'acrylate de n-hexyle, l'acrylate d'isooctyle acrylate, méthacrylate de méthyle, le maléate de diméthyle et le maléate de diéthyle, le monoxyde de carbone; etc en particulier esters d'acides carboxyliques insaturés sont des composants de copolymérisation appropriés.

On peut également citer les copolymères éthylène-acide carboxylique insaturé ionomères de zinc, et en particulier ceux ayant une teneur en acide carboxylique insaturé d'1 à 25 % en poids, en particulier de 5 à 20 % en poids . La teneur du monomère polaire pouvant être copolymérisée est, par exemple, 40 % en poids ou moins, de préférence 30 % ou moins. L'ionomère de zinc a de préférence un degré de neutralisation d'environ 10 à 90 %, en particulier d'environ 15 à 80 %.
Le copolymère peut être en outre mélangé avec un ou plusieurs copolymères ionomères classiques (par exemple, di-, ter-etc) et/ou le copolymère peut être mélangé avec une ou plusieurs résines thermoplastiques classiques, de préférence hydrophiles. En effet, les ionomères de la présente invention peuvent être mélangés avec des résines thermoplastiques non-ioniques pour adapter les propriétés du produit. Les résines thermoplastiques non ioniques incluent notamment les élastomères thermoplastiques, tels que le polyuréthane, le poly-éther-ester, le poly-amide-éther, polyéther-urée, PEBAX (une famille de copolymères à blocs sur la base de polyéther-bloc-amide, commercialement fourni par Arkema) ; styrène-butadiène-styrène, les copolymères bloc (SBS) ; styrène (éthylène-butylène copolymères séquencés)-styrène, etc, les polyamides (oligomère et polymère) les polyesters, les alcools de polyvinyle ; polyoléfines comprenant en PE, PP, E / P copolymères, etc; copolymères d'éthylène avec des comonomères différents, tels que l'acétate de vinyle, (méth) acrylates, l'acide (méth) acrylique, époxy-fonctionnalisé monomère, CO, l'alcool vinylique, etc, les polymères fonctionnalisés avec greffage d'anhydride maléique, etc époxydation, élastomères, tel que l'EPDM, catalysé par un métallocène et un copolymère PE, etc.

Avantageusement, l'alliage utilisé dans l'invention comprend en outre au moins un TPE hydrophile choisi parmi les copolymères à blocs polyamide et blocs PEG (PEBA), les copolymères à blocs polyesters et blocs PEG (COPE), les copolymères à blocs polyuréthanes et blocs PEG (TPU) et leurs mélanges, ledit TPE hydrophile représentant de préférence une teneur de 1 à 99 %, de préférence de 20 à 80% du poids de l'alliage.

Par polymère thermoplastique élastomère (TPE), on entend un copolymère à blocs comprenant, en alternance, des blocs ou segments dits durs ou rigides (au comportement plutôt thermoplastique) et des blocs ou segments dits souples ou flexibles (au comportement plutôt élastomère). A titre d'exemple de copolymère à blocs durs et à blocs souples, on peut citer respectivement (a) les copolymères à blocs polyesters et blocs polyéthers (ci-après COPE ou copolyétheresters), (b) les copolymères à blocs polyuréthanes et blocs polyéthers ou polyesters (appelés aussi TPU abréviation de polyuréthanes thermoplastiques) et (c) les copolymères à blocs polyamide et blocs polyéther (appelés aussi PEBA selon l'IUPAC).
(a) S'agissant des COPE ou copolyétheresters, ce sont des copolymères à blocs polyesters et blocs polyéthers. Ils sont constitués de blocs polyéthers souples issus de polyétherdiols et de blocs polyesters rigides qui résultent de la réaction d'au moins un diacide carboxylique avec au moins un motif diol court allongeur de chaîne. Les blocs polyesters et les blocs polyéthers sont reliés par des liaisons esters résultant de la réaction des fonctions acides de l'acide dicarboxylique avec les fonctions OH du polyétherdiol. L'enchaînement des polyéthers et des diacides forme les blocs souples alors que l'enchaînement du glycol ou du butane diol avec les diacides forme les blocs rigides du copolyétherester. Le diol court allongeur de chaîne peut être choisi dans le groupe constitué du neopentylglycol, du cyclohexanediméthanol et des glycols aliphatiques de formule HO(CH2)nOH dans laquelle n est un entier valant de 2 à 10.
   Avantageusement, les diacides sont des acides dicarboxyliques aromatiques ayant de 8 à 14 atomes de carbone. Jusqu'à 50 % en mole de l'acide aromatique dicarboxylique peut être remplacé par au moins un autre acide aromatique dicarboxylique ayant de 8 à 14 atomes de carbone, et/ou jusqu'à 20 % en mole peut être remplacé par un acide aliphatique dicarboxylique ayant de 2 à 14 atomes de carbone.
   A titre d'exemple d'acides aromatiques dicarboxyliques, on peut citer l'acide téréphtalique, isophtalique, bibenzoïque, naphtalène dicarboxylique, l'acide 4,4'-diphénylenedicarboxylique, l'acide bis(p-carboxyphényl) méthane, l'éthylène bis p-benzoïque acide, l'acide 1-4 tétraméthylène bis(p-oxybenzoïque), l'acide éthylène bis (p-oxybenzoïque), l'acide 1,3-triméthylène bis (p-oxybenzoique).
   A titre d'exemple de glycols, on peut citer l'éthylène glycol, le 1,3-triméthylène glycol, le 1,4-tétraméthylèneglycol, le 1,6-hexaméthylène glycol, le 1,3 propylène glycol, le 1,8 octaméthylèneglycol, le 1,10-décaméthylène glycol et le 1,4-cyclohexylène diméthanol. Les copolymères à blocs polyesters et blocs polyéther sont, par exemple, des copolymères ayant des motifs polyéthers dérivés de polyétherdiols tels que le polyéthylène glycol (PEG), le polypropylène glycol (PPG), le polytriméthylène glycol (PO3G) ou le polytétraméthylène glycol (PTMG), des motifs diacide carboxylique tels que l'acide téréphtalique et des motifs glycol (éthane diol) ou butane diol, 1-4. De tels copolyétheresters sont décrits dans les brevets EP 402 883 et EP 405 227. Ces polyétheresters sont des élastomères thermoplastiques. Ils peuvent contenir des plastifiants.
(b) S'agissant des TPU, on peut citer les polyétheruréthanes qui résultent de la condensation de blocs polyéthers souples qui sont des polyétherdiols et de blocs rigides polyuréthanes issus de la réaction d'au moins un diisocyanate pouvant être choisi parmi les diisocyanate aromatiques (ex : MDI, TDI) et les diisocyanates aliphatiques (ex : HDI ou hexaméthylènediisocyanate) avec au moins un diol court. Le diol court allongeur de chaîne peut être choisi parmi les glycols cités plus haut dans la description des copolyétheresters. Les blocs polyuréthanes et les blocs polyéthers sont reliés par des liaisons résultant de la réaction des fonctions isocyanates avec les fonctions OH du polyétherdiol.
   On peut encore citer les polyesteruréthanes qui résultent de la condensation de blocs polyesters souples qui sont des polyesterdiols et de blocs rigides polyuréthanes issus de la réaction d'au moins un diisocyanate avec au moins un diol court. Les polyesterdiols résultent de la condensation de diacides carboxyliques avantageusement choisis parmi les diacides aliphatiques dicarboxyliques ayant de 2 à 14 atomes de carbone et de glycols qui sont des diols courts allongeurs de chaîne choisis parmi les glycols cités plus haut dans la description des copolyétheresters. Ils peuvent contenir des plastifiants.
(c) S'agissant des « PEBA », ou copolymères à blocs polyéther et blocs polyamide, ils résultent de la polycondensation de blocs polyamides à extrémités réactives avec des blocs polyéthers à extrémités réactives, telles que, entre autres :
   1) blocs polyamides à bouts de chaîne diamines avec des blocs polyoxyalkylènes à bouts de chaînes dicarboxyliques ;
   2) blocs polyamides à bouts de chaînes dicarboxyliques avec des blocs polyoxyalkylènes à bouts de chaînes diamines, obtenues par cyanoéthylation et hydrogénation de blocs polyoxyalkylène alpha-oméga dihydroxylées aliphatiques appelées polyétherdiols ;
   3) blocs polyamides à bouts de chaînes dicarboxyliques avec des polyétherdiols, les produits obtenus étant, dans ce cas particulier, des polyétheresteramides.

Les blocs polyamides à bouts de chaînes dicarboxyliques proviennent, par exemple, de la condensation de précurseurs de polyamides en présence d'un diacide carboxylique limiteur de chaîne. Les blocs polyamides à bouts de chaînes diamines proviennent par exemple de la condensation de précurseurs de polyamides en présence d'une diamine limiteur de chaîne.

La masse molaire en nombre Mn des blocs polyamides est comprise entre 400 et 20000 g/mole et de préférence entre 500 et 10000 g/mole.

Les polymères à blocs polyamides et blocs polyéthers peuvent aussi comprendre des motifs répartis de façon aléatoire.

On peut utiliser avantageusement trois types de blocs polyamides.

Selon un premier type, les blocs polyamides proviennent de la condensation d'un diacide carboxylique, en particulier ceux ayant de 4 à 20 atomes de carbone, de préférence ceux ayant de 6 à 18 atomes de carbone et d'une diamine aliphatique ou aromatique, en particulier celles ayant de 2 à 20 atomes de carbone, de préférence celles ayant de 6 à 14 atomes de carbone.

A titre d'exemples d'acides dicarboxyliques, on peut citer l'acide 1,4-cyclohexyldicarboxylique, les acides butanedioïque, adipique, azélaïque, subérique, sébacique, dodécanedicarboxylique, octadécanedicarboxylique et les acides téréphtalique et isophtalique, mais aussi les acides gras dimérisés.

A titre d'exemples de diamines, on peut citer la tétraméthylène diamine, l'hexaméthylènediamine, la 1,10-décaméthylènediamine, la dodécaméthylènediamine, la triméthylhexaméthylène diamine, les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane (BMACP), et para-amino-di-cyclo-hexyl-méthane (PACM), et l'isophoronediamine (IPDA), la 2,6-bis-(aminométhyl)-norbornane (BAMN) et la pipérazine (Pip).

Avantageusement, on a des blocs PA4.12, PA4.14, PA4.18, PA6.10, PA6.12, PA6.14, PA6.18, PA9.12, PA10.10, PA10.12, PA10.14 et PA10.18, le premier chiffre indiquant le nombre d'atomes de carbone de la diamine et le second chiffre, le nombre d'atomes de carbone de l'acide carboxylique.

Selon un deuxième type, les blocs polyamides résultent de la condensation d'un ou plusieurs acides alpha oméga aminocarboxyliques et/ou d'un ou plusieurs lactames ayant de 6 à 12 atomes de carbone en présence d'un diacide carboxylique ayant de 4 à 12 atomes de carbone ou d'une diamine. A titre d'exemples de lactames, on peut citer le caprolactame, l'oenantholactame et le lauryllactame. A titre d'exemples d'acide alpha oméga amino carboxylique, on peut citer les acides aminocaproïque, amino-7-heptanoïque, amino-11-undécanoïque et amino-12-dodécanoique.

Avantageusement les blocs polyamides du deuxième type sont en polyamide 11, en polyamide 12 ou en polyamide 6.

Selon un troisième type, les blocs polyamides résultent de la condensation d'au moins un acide alpha oméga aminocarboxylique (ou un lactame), au moins une diamine et au moins un diacide carboxylique.

Dans ce cas, on prépare, les blocs polyamide PA par polycondensation :
- de la ou des diamines aliphatiques linéaires ou aromatiques ayant X atomes de carbone ;
- du ou des diacides carboxyliques ayant Y atomes de carbone ; et
- du ou des comonomères {Z}, choisis parmi les lactames et les acides alpha-oméga aminocarboxyliques ayant Z atomes de carbone et les mélanges équimolaires d'au moins une diamine ayant X1 atomes de carbone et d'au moins un diacide carboxylique ayant Y1 atomes de carbones, (X1, Y1) étant différent de (X, Y),
- ledit ou lesdits comonomères {Z} étant introduits dans une proportion pondérale allant jusqu'à 50%, de préférence jusqu'à 20%, encore plus avantageusement jusqu'à 10% par rapport à l'ensemble des monomères précurseurs de polyamide ;
- en présence d'un limiteur de chaîne choisi parmi les diacides carboxyliques ;

Avantageusement, on utilise comme limiteur de chaîne le diacide carboxylique ayant Y atomes de carbone, que l'on introduit en excès par rapport à la stoechiométrie de la ou des diamines.

Selon une variante de ce troisième type, les blocs polyamides résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne. A titre d'exemple d'acide alpha oméga amino carboxylique aliphatique, on peut citer les acides aminocaproïques, amino-7-heptanoïque, amino-11-undécanoïque et amino-12-dodécanoïque. A titre d'exemple de lactame, on peut citer le caprolactame, l'oenantholactame et le lauryllactame. A titre d'exemple de diamines aliphatiques, on peut citer l'hexaméthylènediamine, la dodécaméthylènediamine et la triméthylhexaméthylène diamine. A titre d'exemple de diacides cycloaliphatiques, on peut citer l'acide 1,4-cyclohexyldicarboxylique. A titre d'exemple de diacides aliphatiques, on peut citer les acides butane-dioïque, adipique, azélaïque, subérique, sébacique, dodécanedicarboxylique, les acides gras dimérisés (ces acides gras dimérisés ont de préférence une teneur en dimère d'au moins 98%; de préférence ils sont hydrogénés; ils sont commercialisés sous la marque PRIPOL® par la société UNICHEMA, ou sous la marque EMPOL® par la société HENKEL) et les Polyoxyalkylènes - alpha, oméga diacides. A titre d'exemple de diacides aromatiques, on peut citer les acides téréphtalique (T) et isophtalique (I). A titre d'exemple de diamines cycloaliphatiques, on peut citer les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane(BMACP), et para-amino-di-cyclo-hexyl-méthane (PACM). Les autres diamines couramment utilisées peuvent être l'isophoronediamine (IPDA), la 2,6-bis-(aminométhyl)-norbarnane (BAMN) et la pipérazine.

A titre d'exemples de blocs polyamides du troisième type, on peut citer les suivantes :
- 6.6/6 dans laquelle 6.6 désigne des motifs hexaméthylènediamine condensés avec l'acide adipique. 6 désigne des motifs résultant de la condensation du caprolactame.
- 6.6/6.10/11/12 dans laquelle 6.6 désigne l'hexaméthylènediamine condensée avec l'acide adipique. 6.10 désigne l'hexaméthylènediamine condensée avec l'acide sébacique. 11 désigne des motifs résultant de la condensation de l'acide aminoundécanoïque. 12 désigne des motifs résultant de la condensation du lauryllactame.

De préférence, le polymère comprend de 1 à 80 % en masse de blocs polyéther et de 20 à 99 % en masse de blocs polyamide, de préférence de 4 à 80 % en masse de blocs polyéther et 20 à 96 % en masse de blocs polyamide, de préférence encore de 30 à 60% en masse de blocs polyéther et de 40 à 70% en masse de blocs polyamide. La masse Mn des blocs polyéther est comprise entre 100 et 6 000 g/mole et de préférence entre 200 et 3 000 g/mole.

Les blocs polyéthers sont constitués de motifs oxyde d'alkylène. Ces motifs peuvent être par exemple des motifs oxyde d'éthylène, des motifs oxyde de propylène ou tétrahydrofurane (qui conduit aux enchaînements polytétraméthylène glycol). On utilise ainsi des blocs PEG (polyéthylène glycol), c'est-à-dire ceux constitués de motifs oxyde d'éthylène, des blocs PPG (propylène glycol), c'est-à-dire ceux constitués de motifs oxyde de propylène, des blocs PO3G (polytriméthylène glycol), c'est-à-dire ceux constitués de motifs polytriméthylène ether de glycol (de tels copolymères avec des blocs polytriméthylene ether sont décrits dans le document US 6590065), et des blocs PTMG c'est-à-dire ceux constitués de motifs tétraméthylène glycols appelés aussi polytétrahydrofurane. Les copolymères PEBA peuvent comprendre dans leur chaîne plusieurs types de polyéthers, les copolyéthers pouvant être à blocs ou statistiques. La perméabilité à la vapeur d'eau du copolymère PEBA augmente avec la quantité de blocs polyéther et varie en fonction de la nature de ces blocs. On préfère utiliser un bloc polyéther de polyéthylène glycol qui permet d'obtenir un PEBA présentant une bonne perméabilité.

Les blocs polyéthers peuvent aussi être constitués d'amines primaires éthoxylées. A titre d'exemple d'amines primaires éthoxylées on peut citer les produits de formule : 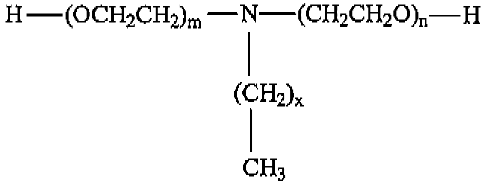 dans laquelle m et n sont compris entre 1 et 20 et x entre 8 et 18. Ces produits sont disponibles dans le commerce sous la marque Noramox® de la société CECA et sous la marque Genamin® de la société Clariant.

Les blocs souples polyéthers peuvent comprendre des blocs polyoxyalkylène à bouts de chaînes NH₂, de tels blocs pouvant être obtenus par cyanoacétylation de blocs polyoxyalkylène alpha-oméga dihydroxylés aliphatiques appelées polyétherdiols. Plus particulièrement, on pourra utiliser les Jeffamines (Par exemple Jeffamine® D400, D2000, ED 2003, XTJ 542, produits commerciaux de la société Huntsman, également décrites dans les documents de brevets JP2004346274, JP2004352794 et EP1482011).

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. La méthode générale de préparation en deux étapes des copolymères PEBA ayant des liaisons ester entre les blocs PA et les blocs PE est connue et est décrite, par exemple, dans le brevet français FR2846332. La méthode générale de préparation des copolymères PEBA de l'invention ayant des liaisons amide entre les blocs PA et les blocs PE est connue et décrite, par exemple dans le brevet européen EP1482011. Les blocs polyéther peuvent être aussi mélangés avec des précurseurs de polyamide et un limiteur de chaîne diacide pour faire les polymères à blocs polyamides et blocs polyéthers ayant des motifs répartis de façon statistique (procédé en une étape).

Bien entendu, la désignation PEBA dans la présente description de l'invention se rapporte aussi bien aux PEBAX® commercialisés par Arkema, aux Vestamid® commercialisés par Evonik®, aux Grilamid® commercialisés par EMS, qu'aux Kellaflex® commercialisés par DSM ou à tout autre PEBA d'autres fournisseurs.

Avantageusement, les copolymères PEBA ont des blocs PA en PA 6, en PA 11, en PA 12, PA 6.12, en PA 6.6/6, en PA 10.10 et/ou en PA 6.14, de préférence des blocs PA 11 et/ou PA 12; et des blocs PE en PTMG, en PPG et/ou en PO3G. Les PEBA à base de blocs PE constitués majoritairement de PEG sont à ranger dans la gamme des PEBA hydrophiles. Les PEBA à base de blocs PE constitués majoritairement de PTMG sont à ranger dans la gamme des PEBA hydrophobes.

Avantageusement, ledit PEBA utilisé dans la composition selon l'invention est obtenu au moins partiellement à partir de matières premières bio-ressourcées. Par matières premières d'origine renouvelable ou matières premières bio-ressourcées, on entend des matériaux qui comprennent du carbone bio-ressourcé ou carbone d'origine renouvelable. En effet, à la différence des matériaux issus de matières fossiles, les matériaux composés de matières premières renouvelables contiennent du ¹⁴C. La « teneur en carbone d'origine renouvelable » ou « teneur en carbone bio-ressourcé » est déterminée en application des normes ASTM D 6866 (ASTM D 6866-06) et ASTM D 7026 (ASTM D 7026-04). A titre d'exemple, les PEBA à base de polyamide 11 proviennent au moins en partie de matières premières bio-ressourcées et présentent une teneur en carbone bio-ressourcé d'au moins 1%, ce qui correspond à un ratio isotopique de ¹²C/¹⁴C d'au moins 1,2 x 10⁻¹⁴. De préférence, les PEBA selon l'invention comprennent au moins 50% en masse de carbone bio-ressourcé sur la masse totale de carbone, ce qui correspond à un ratio isotopique ¹²C/¹⁴C d'au moins 0,6x10⁻¹². Cette teneur est avantageusement plus élevée, notamment jusqu'à 100%, qui correspond à un ratio isotopique ¹²C/¹⁴C de 1,2 x 10⁻¹², dans le cas de PEBA à blocs PA 11 et blocs PE comprenant du PO3G, PTMG et/ou PPG issus de matières premières d'origine renouvelable.

Par amidon thermoplastique, ci-après nommé « TPS », on entend de l'amidon natif transformé en matériau processable par plastification en présence d'une faible quantité d'eau. L'amidon plastifié appelé «amidon thermoplastique» est obtenu notamment avec un plastifiant non volatil tel que le glycérol. Ce matériau a de nombreux avantages tels que son prix, son caractère biodégradable et son origine issue de ressources renouvelables abondantes. Il peut être mis en oeuvre par des outils conventionnels de la plasturgie. L'amidon plastifié possède quelques limites importantes telles que sa forte sensibilité à l'eau, des propriétés mécaniques et des propriétés adhésives limitées par rapport à un thermoplastique classique et un vieillissement très long, après sa mise en oeuvre, avant une stabilisation de ses propriétés (phénomènes de rétrogradation ou de densification). Son utilisation sous forme d'alliage selon l'invention permet de pallier ces inconvénients grâce à la formulation de l'amidon avec d'autres composés et l'utilisation du procédé selon l'invention. Selon un mode de réalisation préféré, le pourcentage d'amidon thermoplastique dans l'alliage utilisé représente de 10% à 90% du poids de l'alliage, de préférence de 30 à 80%, de préférence encore de 40 à 70 %, de préférence encore de 50 à 70 % du poids de l'alliage.
Tout type d'amidon peut être utilisé dans l'invention. Ce peut être de l'amidon de maïs, de pomme de terre, de blé, de tapioca, de pois. L'amidon peut être modifié par greffage de groupements chimiques. Il peut être employé dans les différentes formes suivantes :
- l'amidon natif (non modifié): les grains d'amidon sont le siège de l'organisation semi-cristalline des deux polymères constitutifs que sont l'amylose et l'amylopectine. Le degré de polymérisation et la proportion d'amylose varient selon l'origine botanique de l'amidon.
- l'amidon gélatinisé : lors d'un chauffage voisin de 80°C en milieu aqueux, l'amidon s'hydrate et gonfle. Une partie de l'amylose, puis de l'amylopectine passe en solution (empesage). La suspension devient alors visqueuse, l'amidon devient plus facilement hydrolysable.
- l'amidon gélifié - l'amidon rétrogradé : lorsque la température de la solution aqueuse diminue, le système se gélifie puis se réorganise en une structure semi-cristalline (rétrogradation). Ces molécules réorganisées sont formées d'amylose, d'amylopectine et de cristaux mixtes amylose-amylopectine.
- l'amidon destructuré, forme dans laquelle les polymères d'amylose et d'amylopectine sont dispersés.

En plus de l'utilisation d'amidon qui est une matière naturelle, l'utilisation de polymères polyoléfines préparées au moins partiellement à partir de matières premières bio-ressourcées permet d'augmenter davantage la quantité de matières naturelles dans le film selon l'invention.

L'alliage selon l'invention peut être préparé par toute méthode, qui rend possible l'obtention d'un mélange intime ou homogène contenant l'amidon thermoplastique et ladite au moins une polyoléfine fonctionnelle (ci-après POF) hydrophile selon l'invention, et éventuellement un(des) additif(s) et/ou un(des) agent(s) compatibilisant(s), telle que le compoundage à l'état fondu, l'extrusion, le compactage, ou encore le malaxeur à rouleau. Plus particulièrement, l'alliage selon l'invention est préparé par mélange à l'état fondu de tous les ingrédients (amidon, plastifiant, eau, POF, et éventuels compatibilisant(s) et additif (s)) dans un procédé dit « en direct ». On peut aussi préparer l'alliage selon un procédé en deux étapes, la première consistant en un mélange concentré de l'amidon, plastifiant et eau, pour former une matrice TPS, puis diluer le TPS par mélange avec la matrice POF dans une seconde étape.
On utilise avantageusement les dispositifs habituels de mélange et de malaxage de l'industrie des thermoplastiques tels que les extrudeuses, les extrudeuses de type bi-vis, notamment les extrudeuses bi-vis co-rotatives engrenantes auto-nettoyantes, et les malaxeurs, par exemple les co-malaxeurs de marque BUSS ou les mélangeurs internes. Dans ce procédé, les ingrédients peuvent être soit mélangés à sec et introduits dans la trémie d'alimentation ou alors la POF hydrophile peut être introduite par gavage latéral dans le TPS ou dans un mélange amidon+plastifiant+eau préalablement fondu.
Il est recommandé que la préparation des alliages de l'invention (le compoundage) et leur mise en oeuvre soient faites dans les conditions les plus douces possibles en terme de température et de taux de cisaillement. Pour ce faire, on peut se reporter à la référence : O. Schacker, Plastics Additives and Compounding, April 2002, pages 28-33.
Les alliages selon l'invention présentent un excellent rapport performance/coût pour obtenir de nouveaux matériaux imper-respirants. Selon les ratios utilisés POF/TPS on obtient des performances différentes. Afin d'améliorer la compatibilité du mélange l'ajout de compatibilisants. Cette dernière est préférée dans la présente invention.
Contrairement aux multicouches fabriqués par coextrusion d'amidon plastifié et de polymères thermoplastiques, les alliages selon l'invention n'ont pas de problèmes d'instabilités interfaciales dus notamment aux différences de comportement chimique et rhéologique des matériaux mis en présence dans la filière. De plus, les alliages selon l'invention n'ont pas les problèmes de diminution des propriétés d'hydrophilie généralement rencontrés avec les biocomposites. En effet, l'introduction de fibres ligno-cellulosiques dans des biopolyesters ou dans une matrice d'amidon plastifié entraine une diminution des propriétés d'hydrophilie liée à la présence des fibres plus hydrophobes.

La présente invention a également pour objet un film ultra fin, imper respirant et adhésif, caractérisé en ce qu'il comprend un alliage d'amidon thermoplastique et de POF hydrophile, ladite POF comprenant au moins 10%, de préférence au moins 20%, de préférence au moins 30%, de préférence au moins 40%, de préférence au moins 50%, en poids de polyéthylène glycol (PEG) et/ou de sel métallique sur le poids de la POF. Avantageusement, le pourcentage d'amidon thermoplastique représente 10% à 90%, et le pourcentage de POF hydrophile représente de 90% à 10%, du poids de l'alliage dans le film.

Selon un mode de réalisation, le film imper respirant de l'invention est préparé directement après la fabrication de l'alliage selon les étapes suivantes : préparer un mélange de la ou des POF(s) avec de l'amidon thermoplastique (ou de l'amidon de l'eau et un plastifiant), puis faire fondre le mélange par chauffage à une température supérieure à la température de fusion du ou des polymère(s) et à la température de fusion de l'amidon, de façon à former un mélange homogène sous forme d'alliage. Puis, on étire l'alliage thermoplastique obtenu pour former un film. Le chauffage de la ou des POF peut être effectué séparément de l'étape de chauffage de l'amidon, la ou les POF fondue(s) et l'amidon étant ensuite mélangés.

Selon un mode de réalisation préféré du procédé de l'invention, on réalise les étapes suivantes :
a) mise à disposition d'un mélange d'amidon, de plastifiant et d'eau ;
b) mise à disposition de POF hydrophile tel que défini ci-dessus ;
c) extrusion du mélange de l'étape a) puis ajout de la POF de l'étape b) au mélange en fin d'extrusion, généralement à une température supérieure à la température de fusion du ou des polymère(s) de l'étape a) et à la température de fusion de l'amidon ;
d) étirement du mélange pour former un film.
De préférence, l'étape c) est effectuée à une température comprise dans la gamme de 100°C à 300°C, de préférence de 150 à 250°C.
Selon un mode de réalisation, l'étape d'étirement du mélange est effectuée par extrusion soufflage. Selon un mode de réalisation alternatif, l'étape d'étirement du mélange est effectuée par extrusion à plat.
Le procédé de l'invention permet de maintenir la POF à une température suffisamment élevée, supérieure au point de fusion de la POF hydrophile pour obtenir des films ultra-fins c'est-à-dire d'épaisseur inférieure ou égale à 25 µm, tout en limitant le risque de dégradation de l'amidon et du ou des POF(s). De préférence, la température de chauffage ou d'extrusion avant étirement du film est comprise dans la gamme de 100°C à 300°C, de préférence de 150 à 250°C.
Le film imper respirant selon l'invention a une épaisseur inférieure ou égale à 25 µm, de préférence comprise dans la gamme de 5 à 25 µm.
L'invention a également pour objet un produit stratifié (ci-après stratifié) comprenant au moins un matériau textile et au moins un film imper respirant selon l'invention, ledit film adhérent sur au moins une surface du matériau textile avec une force de pelage comprise dans la gamme de 0,5 à 50 N.
Avantageusement, le film selon l'invention est notamment appliqué sur un matériau textile par tout procédé connu, de préférence sans utiliser de colle entre le film et le textile. On peut citer à titre d'exemple l'extrusion couchage d'un film de l'alliage sur le textile, ou bien le pressage à chaud (thermo-lamination) du film sur un textile ou entre deux textiles, à une température suffisante pour que le film s'imprègne et emprisonne les fibres du textile. Selon un mode de réalisation alternatif ou combiné au(x) précédent(s), on peut également citer le collage à l'aide d'un joint de colle, de préférence un joint de colle aqueux, c'est-à-dire comprenant moins de 5% en poids de solvant sur la composition de joint de colle. Il s'avère que les films utilisant un alliage selon l'invention présentent une meilleure adhérence sur textile, même sans colle, par rapport aux films imper respirants existants. Selon un mode de réalisation préféré, le procédé de mise en oeuvre des alliages utilisés pour l'obtention de matériaux imper-respirants et des stratifiés selon l'invention, se caractérise en ce que les compositions sont appliquées sur une ligne d'extrusion-cast ou d'extrusion blown, à l'état fondu, à une température d'au moins 120°C pour former un film ayant une épaisseur minimale de 5 µm. Ce type de procédé permet aussi d'optimiser les conditions de transformation pour préparer des films les plus fins possible, d'épaisseur comprise dans la gamme de 5 à 25 µm, issus de mélanges en ligne des matériaux selon l'invention dilués en proportions variées et sans avoir de micro-perforations. En jouant avec les paramètres température et vitesse de tirage de la ligne, on peut contrôler l'épaisseur des films. Selon un autre mode de réalisation préféré, le procédé de mise en oeuvre des compositions utilisées pour l'obtention de films et stratifiés imper-respirants selon l'invention, se caractérise en ce que les compositions sont appliquées à l'état fondu sur une ligne d'extrusion-couchage sur un textile, ou d'extrusion-lamination entre deux textiles, tel qu'un non-tissé en matériau fibreux et/ou tout autre matériau textile, y-compris le papier, pour former un complexe de grammage d'au moins 5 g/m². Selon un procédé connu, le film selon l'invention est extrudé puis couché à l'état fondu sur le textile. De préférence, le film présente une épaisseur comprise entre 5 et 50 µm, et de préférence entre environ 5 et 10 µm. Avantageusement, dans le cadre d'une application par extrusion-couchage, on dépose de 10 à 50 g/m² de film thermoplastique sur le textile.
Dans la présente description de l'invention, on entend :
- Par « matériau textile » ou « textile », tout matériau réalisé à partir de fibres ou de filaments ainsi que tout matériau, y-compris le papier et le carton, formant une membrane poreuse caractérisée par un rapport longueur/épaisseur d'au moins 300 ;
- Par « fibre », toute matière synthétique ou naturelle, caractérisée par un rapport longueur/diamètre d'au moins 300 ;
- Par « filament », toute fibre de longueur infinie ;
Parmi les textiles, on trouve notamment des mats de fibres (les pansements, les filtres, le feutre), des mèches (pansements) des fils (à coudre, à tricoter, à tisser), des tricots (rectiligne, circulaire, fullyfashioned) des tissus (traditionnel, Jacquard, multiple, double face, multi axial, 2D et demi, 3D), et bien d'autres. Selon un mode de réalisation préféré de l'invention, ledit au moins un matériau textile se présente sous la forme d'une membrane poreuse, d'un textile tissé ou d'un textile non tissé.
Avantageusement, ledit au moins un matériau textile comprend des fibres synthétiques, notamment des fibres synthétiques obtenues à partir de matières premières bio-ressourcées, des fibres naturelles, des fibres artificielles fabriquées à partir de matières premières naturelles, des fibres minérales, et/ou des fibres métalliques.

Avantageusement, ledit textile comprend des fibres synthétiques obtenues à partir de matières premières bio-ressourcées, telles que des fibres de polyamide, notamment de polyamide 11. Avantageusement, ledit textile comprend en outre des fibres naturelles, telles que du coton, de la laine et/ou de la soie, des fibres artificielles fabriquées à partir de matières premières naturelles, des fibres minérales, telles que des fibres de carbone, de verre, de silice et/ou de magnésium.

De préférence, ledit matériau textile, quelle que soit sa forme, est fabriqué à partir d'au moins une des matières suivantes : du polypropylène, du polyéther, du polyester et/ou du coton.

Le textile est notamment choisi parmi des étoffes ou des surfaces textiles, telles que des surfaces tissées, tricotées, non-tissées ou tapis. Ces articles peuvent être par exemple des moquettes, des tapis, des revêtements d'ameublement, des revêtements de surface, les canapés, des rideaux, de la literie, des matelas et oreillers, des vêtements et des matériaux textiles médicaux.

Le textile selon l'invention constitue avantageusement un feutre, un filtre, un film, une gaze, une toile, un pansement, une couche, un tissu, un tricot, un article d'habillement, un vêtement, un article de literie, un article d'ameublement, un rideau, un revêtement d'habitacle, un textile technique fonctionnel, un géotextile et/ou un agrotextile.
Ledit textile est avantageusement utilisé dans le domaine médical, l'hygiène, la bagagerie, la confection, l'habillement, l'équipement ménager ou de la maison, l'ameublement, les moquettes, l'automobile, l'industrie, notamment la filtration industrielle, l'agriculture et/ou le bâtiment.

Un tel film présente à la fois une bonne durabilité ainsi qu'une meilleure perméabilité à la vapeur d'eau. Le film conserve au cours du temps sa propriété de barrière contre les éléments extérieurs qui pourraient s'infiltrer dans le textile. L'amélioration de la perméabilité du film à la vapeur d'eau favorise la ventilation à travers le textile.

### EXEMPLES

Des films imper respirants ont été préparés à partir de mélanges comprenant diverses proportions d'une POF hydrophile, d'un copolyéther bloc amide PEBA, d'une autre polyoléfine fonctionnalisée et d'amidon thermoplastique. La POF utilisée dans les exemples ci-dessous est une POF greffée PEG (27% de PEG), ici terpolymère éthylène (79,9%) - butylacrylate (17%) - anhydride maléïque (3,1%) greffé PEG (Lotader BX3460) ou une POF ionomère de la gamme Surlyn® de Du Pont.

Le TPE utilisé dans les exemples ci-dessous appartient à la gamme des PEBA hydrophiles commercialisés par Arkema, et en particulier ceux dont le bloc polyéther dérive du polyéthylène glycol. Il s'agit ici du Pebax® MV3000.

L'autre polyoléfine fonctionnalisée éventuellement utilisée dans certains exemples est le Lotryl® 28MA07 qui est un copolymère d'éthylène avec de l'acrylate de n-methyle à une teneur pondérale d'acrylate de 28%. L'amidon utilisé est de l'amidon modifié (TPS 3947) commercialisé par la Société Roquette.

L'imper-respirabilité (ou MVTR) des différents films de compositions A à M est mesurée selon la norme ASTM E96, méthode BW 38°C / 50 % Humidité Relative, rapportée à un film de 25 µm.

L'adhérence des substrats est directement liée aux valeurs de forces de pelage. Les essais de pelage sont faits de préférence dans un délai compris entre 2 heures et 48 heures après la fabrication d'un stratifié comprenant un film de 25 µm adhésif, après extrusion couchage, sur un textile non tissé de polypropylène. On a effectué sur les stratifiés de chacun des essais A à I un essai de pelage (selon la norme ISO11339), sur une bande de stratifiée de 15 mm de large, on initie la rupture entre le film et le textile par un objet tranchant, puis on tire simultanément sur le film imper respirant et le textile à une vitesse de 200 mm/minute.
Le Tableau 1 ci-dessous récapitule les compositions des différents mélanges

Les exemples A-G sont comparatifs. Les exemples H à M sont selon l'invention.

**Tableau 1**

| | Essais | % en poids de polyolefine greffée PEG (Lotader BX3460) | % en poids de POF ionomère | % en poids de polyoléfine fonctionnalisée (Lotryl 28MA07) | % en poids d'amidon thermoplastique | épaisseur du film (µm) | Imperrespirabilité MVTR (g/m2/jour) pour 25 µm |
|---|---|---|---|---|---|---|---|
| Exemples comparatifs | A | 100 | 0 | 0 | 0 | 25 | 420 |
| | B | 80 | 0 | 20 | 0 | 25 | 320 |
| | C | 70 | 0 | 30 | 0 | 25 | 280 |
| | D | 30 | 0 | 70 | 0 | 25 | 120 |
| | E | 20 | 0 | 80 | 0 | 25 | 105 |
| | F | 0 | 0 | 100 | 0 | 25 | 80 |
| | G | 0 | 100 | 0 | 0 | 25 | 500 |
| Exemples selon Invention | H | 50 | 0 | 0 | 50 | 25 | 1200 |
| | I | 40 | 0 | 40 | 20 | 25 | 600 |
| | J | 10 | 0 | 80 | 10 | 25 | 200 |
| | K | 0 | 50 | 0 | 50 | 25 | 1400 |
| | L | 0 | 40 | 40 | 20 | 25 | 725 |
| | M | 0 | 10 | 80 | 10 | 25 | 180 |

## Revendications

1. Utilisation d'amidon thermoplastique pour la fabrication d'un film ultra-fin, c'est-à-dire d'épaisseur inférieure ou égale à 25 µm, imper respirant et adhésif,
ledit amidon thermoplastique se présentant sous la forme d'un alliage avec au moins une polyoléfine fonctionnalisée hydrophile obtenue soit par copolymérisation, soit par greffage, d'un tronc en polyoléfine par un monomère insaturé, ledit monomère insaturé étant greffé par des PEG et/ou formant un sel métallique.

2. Utilisation selon la revendication 1, dans lequel le pourcentage d'amidon thermoplastique représente de 10% à 90% du poids de l'alliage, de préférence de 30 à 80%, de préférence encore de 40 à 70 %, de préférence encore de 50 à 70 % du poids de l'alliage.

3. Utilisation selon l'une des revendications précédentes, dans laquelle la polyoléfine hydrophile comprend au moins 10%, de préférence au moins 20%, de préférence au moins 30%, en poids de polyéthylène glycol (PEG) et/ou de sel métallique, sur le poids de polyoléfine.

4. Utilisation selon l'une des revendications précédentes, dans laquelle l'alliage comprend en outre au moins un TPE hydrophile choisi parmi les copolymères à blocs polyamide et blocs PEG (PEBA), les copolymères à blocs polyesters et blocs PEG (COPE), les copolymères à blocs polyuréthanes et blocs PEG (TPU) et leurs mélanges, ledit TPE hydrophile représentant de préférence une teneur de 1 à 99 %, de préférence de 20 à 80% du poids de l'alliage.

5. Film ultra fin, d'épaisseur inférieure ou égale à 25 µm, imper respirant et adhésif, **caractérisé en ce qu'**il comprend un alliage d'amidon thermoplastique et de polyoléfine hydrophile, ladite polyoléfine comprenant au moins un motif polyéthylène et au moins un monomère insaturé sur lequel est greffée une teneur d'au moins 10%, de préférence au moins 20%, de préférence au moins 30%, de préférence au moins 40%, en poids de polyéthylène glycol (PEG) et/ou de sel métallique, sur le poids de la polyoléfine.

6. Film selon la revendication 5, dans lequel :
- le pourcentage d'amidon thermoplastique représente 10% à 90%,
- le pourcentage de polyoléfine hydrophile représente de 90% à 10%,
du poids de l'alliage.

7. Film selon l'une quelconque des revendications 5 ou 6, comprenant en outre une polyoléfine fonctionnalisée comportant un greffage par un monomère choisi dans le groupe comprenant les acides carboxyliques insaturés, les anhydrides carboxyliques insaturés, les monomères vinyliques, les monomères acryliques, ou un mélange de ceux-ci.

8. Film imper respirant selon la revendication 7, dans lequel la polyoléfine fonctionnalisée est choisie dans le groupe comprenant les copolymères éthylène-ester acrylique, les copolymères éthylène-ester acrylique-anhydride maléique, les copolymères éthylène-ester acrylique-méthacrylate de glycidyle.

9. Film imper respirant selon l'une des revendications 5 à 8, dans lequel le film a une épaisseur comprise dans la gamme de 5 à 25 µm.

10. Procédé de fabrication du film selon l'une des revendications 5 à 9, comprenant les étapes de :
a) mise à disposition d'un mélange d'amidon, de plastifiant et d'eau ;
b) mise à disposition de la polyoléfine hydrophile telle que définie par l'une quelconque des revendications 1 ou 3
c) extrusion du mélange de l'étape a) puis ajout de la polyoléfine de l'étape b) au mélange en fin d'extrusion,
d) étirement du mélange pour former un film.

11. Procédé selon la revendication 10, dans lequel l'étape d'étirement du mélange est effectuée par extrusion soufflage.

12. Procédé selon la revendication 10, dans lequel l'étape d'étirement du mélange est effectuée par extrusion à plat.

13. Procédé selon l'une quelconque des revendications 10 à 12, dans lequel l'étape c) est effectuée à une température comprise dans la gamme de 100°C à 300°C, de préférence de 150 à 250°C.

14. Produit stratifié comprenant au moins un matériau textile et au moins un film imper respirant selon l'une des revendications 5 à 9, ledit film adhérent sur au moins une surface du matériau textile avec une force de pelage comprise dans la gamme de 0,5 à 50 N, de préférence de 0,5 à 10 N.

15. Stratifié selon la revendication 14, dans lequel ledit au moins un matériau textile se présente sous la forme d'une membrane poreuse, d'un textile tissé ou d'un textile non tissé.

16. Stratifié selon la revendication 14 ou 15, dans lequel ledit au moins un matériau textile comprend des fibres synthétiques, notamment des fibres synthétiques obtenues à partir de matières premières bio-ressourcées, des fibres naturelles, des fibres artificielles fabriquées à partir de matières premières naturelles, des fibres minérales, et/ou des fibres métalliques.

17. Stratifié selon l'une quelconque des revendications 14 à 16, dans lequel ledit au moins un matériau textile constitue un feutre, un filtre, un film, une gaze, une toile, un pansement, une couche, un tissu, un tricot, un article d'habillement, un vêtement, un article de literie, un article d'ameublement, un rideau, un revêtement d'habitacle, un textile technique fonctionnel, un géotextile, et/ou un agrotextile.

18. Utilisation d'un film selon l'une quelconque des revendications 5 à 9 dans le domaine médical, l'hygiène, la bagagerie, la confection, l'habillement, l'équipement ménager ou de la maison, l'ameublement, les moquettes, l'automobile, l'industrie, notamment la filtration industrielle, l'agriculture et/ou le bâtiment.

## Patentansprüche

1. Verwendung einer thermoplastischen Stärke zur Herstellung eines ultrafeinen, atmungsaktiven und klebrigen Films, d. h. mit einer Dicke von kleiner oder gleich 25 µm,
wobei die thermoplastische Stärke in der Form einer Legierung mit mindestens einem hydrophilen, funktionalisierten Polyolefin vorliegt, das entweder durch Copolymerisation oder durch Pfropfen eines Polyolefinstamms mit einem ungesättigten Monomer erhalten wird, wobei das ungesättigte Monomer durch PEG gepfropft ist und/oder ein Metallsalz bildet.

2. Verwendung nach Anspruch 1, wobei der Prozentsatz der thermoplastischen Stärke von 10 % bis 90 % des Gewichts der Legierung, vorzugsweise von 30 bis 80 %, noch bevorzugter von 40 bis 70 %, noch bevorzugter von 50 bis 70 % des Gewichts der Legierung beträgt.

3. Verwendung nach einem der vorhergehenden Ansprüche, wobei das hydrophile Polyolefin mindestens 10 Gew.-%, vorzugsweise mindestens 20 Gew.-%, vorzugsweise mindestens 30 Gew.-% Polyethylenglykol (PEG) und/oder Metallsalz, bezogen auf das Gewicht des Polyolefins, umfasst.

4. Verwendung nach einem der vorhergehenden Ansprüche, wobei die Legierung außerdem mindestens ein hydrophiles TPE umfasst, das ausgewählt ist aus Copolymeren mit Polyamidblöcken und PEG-Blöcken (PEBA), Copolymeren mit Polyesterblöcken und PEG-Blöcken (COPE), Copolymeren mit Polyurethanblöcken und PEG-Blöcken (TPU) und ihren Mischungen, wobei das hydrophile TPE vorzugsweise einen Gehalt von 1 bis 99 %, vorzugsweise von 20 bis 80 % des Gewichts der Legierung repräsentiert.

5. Ultrafeiner, atmungsaktiver und klebriger Film mit einer Dicke von kleiner oder gleich 25 µm, **dadurch gekennzeichnet, dass** dieser eine Legierung von thermoplastischer Stärke und hydrophilem Polyolefin umfasst, wobei das Polyolefin mindestens eine Polyethyleneinheit und mindestens ein ungesättigtes Monomer umfasst, auf das ein Gehalt von mindestens 10 Gew.-%, vorzugsweise mindestens 20 Gew.-%, vorzugsweise mindestens 30 Gew.-%, vorzugsweise mindestens 40 Gew.-% Polyethylenglykol (PEG) und/oder Metallsalz gepfropft ist, bezogen auf das Gewicht des Polyolefins.

6. Film nach Anspruch 5, wobei:
- der Prozentsatz der thermoplastischen Stärke 10 % bis 90 %,
- der Prozentsatz des hydrophilen Polyolefins von 90 % bis 10 %
des Gewichts der Legierung beträgt.

7. Film nach einem der Ansprüche 5 oder 6, außerdem umfassend ein funktionalisiertes Polyolefin, umfassend eine Pfropfung durch ein Monomer, das ausgewählt ist aus der Gruppe umfassend ungesättigte Carbonsäuren, ungesättigte Carbonsäureanhydride, Vinylmonomere, Acrylmonomere oder eine Mischung davon.

8. Atmungsaktiver Film nach Anspruch 7, wobei das funktionalisierte Polyolefin ausgewählt ist aus der Gruppe umfassend Ethylen-Acrylester-Copolymere, Ethylen-Acrylester-Maleinsäureanhydrid-Copolymere, Ethylen-Acrylester-Glycidylmethacrylat-Copolymere.

9. Atmungsaktiver Film nach einem der Ansprüche 5 bis 8, wobei der Film eine Dicke im Bereich von 5 bis 25 µm aufweist.

10. Verfahren zur Herstellung eines Films nach einem der Ansprüche 5 bis 9, umfassend die folgenden Schritte:
a) Bereitstellen einer Mischung von Stärke, Weichmacher und Wasser;
b) Bereitstellen eines hydrophilen Polyolefins, wie durch einen der Ansprüche 1 oder 3 definiert,
c) Extrudieren der Mischung von Schritt a), dann Zugabe des Polyolefins von Schritt b) zur Mischung am Ende der Extrusion,
d) Strecken der Mischung, um einen Film zu bilden.

11. Verfahren nach Anspruch 10, wobei der Schritt des Streckens der Mischung durch Blasextrusion bewirkt wird.

12. Verfahren nach Anspruch 10, wobei der Schritt des Streckens der Mischung durch Flachextrusion bewirkt wird.

13. Verfahren nach einem der Ansprüche 10 bis 12, wobei Schritt c) bei einer Temperatur im Bereich von 100°C bis 300°C, vorzugsweise von 150 bis 250°C durchgeführt wird.

14. Geschichtetes Produkt, umfassend mindestens ein Textilmaterial und mindestens einen atmungsaktiven Film nach einem der Ansprüche 5 bis 9, wobei der Film an mindestens einer Fläche des Textilmaterials mit einer Abschälkraft im Bereich von 0,5 bis 50 N, vorzugsweise von 0,5 bis 10 N haftet.

15. Schichtstoff nach Anspruch 14, wobei das mindestens eine Textilmaterial in der Form einer porösen Membran, eines gewebten Textilmaterials oder eines nicht gewebten Textilmaterials vorliegt.

16. Schichtstoff nach Anspruch 14 oder 15, wobei das mindestens eine Textilmaterial synthetische Fasern umfasst, insbesondere synthetische Fasern, die aus Ausgangsmaterialien von Bioressourcen erhalten werden, natürliche Fasern, Kunstfasern, die aus natürlichen Ausgangsmaterialien hergestellt sind, mineralische Fasern und/oder metallische Fasern.

17. Schichtstoff nach einem der Ansprüche 14 bis 16, wobei das mindestens eine Textilmaterial ein Filz, ein Filter, ein Film, eine Gaze, ein Stoff, ein Verband, eine Schicht, ein Gewebe, ein Trikot, ein Bekleidungsartikel, eine Kleidung, ein Bettwäscheartikel, ein Möbelartikel, ein Vorhang, eine Fahrzeuginnenraumauskleidung, ein Textilmaterial mit funktioneller Technik, ein Geotextilmaterial und/oder ein Agrotextilmaterial ist.

18. Verwendung eines Films nach einem der Ansprüche 5 bis 9, auf dem Gebiet der Medizin, Hygiene, von Gepäck, Bekleidung, Kleidung, Haushaltsgeräten oder Hausrat, Möbeln, Teppichen, Fahrzeugen, der Industrie, insbesondere der industriellen Filtration, Landwirtschaft und/oder des Bauwesens.

## Claims

1. Use of thermoplastic starch in the manufacture of an adhesive and ultrathin waterproof-breathable film, that is to say with a thickness of less than or equal to 25 µm, said thermoplastic starch being provided in the form of an alloy with at least one hydrophilic functionalized polyolefin obtained either by copolymerization or by grafting of a polyolefin backbone with an unsaturated monomer, said unsaturated monomer being grafted by PEGs and/or forming a metal salt.

2. Use according to Claim 1, in which the percentage of thermoplastic starch represents from 10% to 90% of the weight of the alloy, preferably from 30% to 80%, more preferably from 40% to 70%, more preferably from 50% to 70% of the weight of the alloy.

3. Use according to either of the preceding claims, in which the hydrophilic polyolefin comprises at least 10% by weight, preferably at least 20% by weight, preferably at least 30% by weight, of polyethylene glycol (PEG) and/or of metal salt, with regard to the weight of polyolefin.

4. Use according to one of the preceding claims, in which the alloy additionally comprises at least one hydrophilic TPE chosen from copolymers comprising polyamide blocks and PEG blocks (PEBAs), copolymers comprising polyester blocks and PEG blocks (COPEs), copolymers comprising polyurethane blocks and PEG blocks (TPUs) and their blends, said hydrophilic TPE preferably representing a content of 1% to 99%, preferably of 20% to 80%, of the weight of the alloy.

5. Adhesive and ultrathin waterproof-breathable film, with a thickness of less than or equal to 25 µm, **characterized in that** it comprises an alloy of thermoplastic starch and of hydrophilic polyolefin, said polyolefin comprising at least one polyethylene unit and at least one unsaturated monomer to which is grafted a content of at least 10% by weight, preferably at least 20% by weight, preferably at least 30% by weight, preferably at least 40% by weight, of polyethylene glycol (PEG) and/or of metal salt, with regard to the weight of the polyolefin.

6. Film according to Claim 5, in which:
- the percentage of thermoplastic starch represents from 10% to 90%,
- the percentage of hydrophilic polyolefin represents from 90% to 10%,
of the weight of the alloy.

7. Film according to either one of Claims 5 and 6, additionally comprising a functionalized polyolefin comprising a grafting by a monomer chosen from the group consisting of unsaturated carboxylic acids, unsaturated carboxylic anhydrides, vinyl monomers, acrylic monomers and a mixture of these.

8. Waterproof-breathable film according to Claim 7, in which the functionalized polyolefin is chosen from the group consisting of ethylene/acrylic ester copolymers, ethylene/acrylic ester/maleic anhydride copolymers and ethylene/acrylic ester/glycidyl methacrylate copolymers.

9. Waterproof-breathable film according to one of Claims 5 to 8, in which the film has a thickness within the range from 5 to 25 µm.

10. Process for the manufacture of the film according to one of Claims 5 to 9, comprising the stages of:
a) making available a blend of starch, of plasticizer and of water;
b) making available the hydrophilic polyolefin as defined by either one of claims 1 and 3;
c) extruding the blend of stage a) and then adding the polyolefin of stage b) to the blend at the end of extrusion;
d) drawing the blend in order to form a film.

11. Process according to Claim 10, in which the stage of drawing the blend is carried out by extrusion/blow molding.

12. Process according to Claim 10, in which the stage of drawing the blend is carried out by cast film extrusion.

13. Process according to any one of Claims 10 to 12, in which stage c) is carried out at a temperature within the range from 100°C to 300°C, preferably from 150°C to 250°C.

14. Laminated product comprising at least one textile material and at least one waterproof-breathable film according to one of Claims 5 to 9, said film adhering to at least one surface of the textile material with a peel strength within the range from 0.5 to 50 N, preferably from 0.5 to 10 N.

15. Laminate according to Claim 14, in which said at least one textile material is provided in the form of a porous membrane, of a woven textile or of a nonwoven textile.

16. Laminate according to Claim 14 or 15, in which said at least one textile material comprises synthetic fibres, in particular synthetic fibres obtained from bioresourced starting materials, natural fibres, artificial fibres manufactured from natural starting materials, mineral fibres and/or metal fibres.

17. Laminate according to any one of Claims 14 to 16, in which said at least one textile material constitutes a felt, a filter, a film, a gauze, a cloth, a dressing, a layer, a fabric, an item of knitwear, an item of clothing, a garment, an item of bedding, an item of furniture, a curtain, a compartment covering, a functional technical textile, a geotextile and/or an agrotextile.

18. Use of a film according to any one of Claims 5 to 9 in the medical field, hygiene, luggage, the clothing industry, the garment industry, domestic or household equipment, furniture, fitted carpets, the automobile industry, industry, in particular industrial filtration, agriculture and/or the construction industry.
